# EUROPÄISCHE PATENTSCHRIFT

(11) **EP 0 757 229 B1**
(45) Veröffentlichungstag und Bekanntmachung des Hinweises auf die Patenterteilung: **05.12.2001**
(21) Anmeldenummer: 96112518.4
(22) Anmeldetag: 02.08.1996
(51) Int. Cl.: G01B 11/02, G01B 11/14, G01B 21/16, B60G 17/015

(54) **Vorrichtung zum berührungslosen Bestimmen des Höhenstandes an einem Kraftfahrzeug**
Device to determine without contact the height position of a motor vehicle
Dispositif de détermination sans contact de la hauteur d'un véhicule

(30) Priorität: 04.08.1995 DE 19528798
(43) Veröffentlichungstag der Anmeldung: 05.02.1997
(73) Patentinhaber: Schenck Pegasus GmbH, 64293 Darmstadt (DE)
(72) Erfinder: Tentrup, Thomas Dr. rer. nat., 66459 Kirkel (DE)
(74) Vertreter: Vièl, Christof, Dipl.-Ing.

(56) Entgegenhaltungen:
- EP-A- 0 280 941
- DE-A- 4 430 813
- US-A- 4 598 481

## Beschreibung

Die Erfindung betrifft eine Vorrichtung zum berührungslosen Bestimmen des Höhenstandes an einem Kraftfahrzeug.

Die Bestimmung der Spur- und Sturzwinkel von Kraftfahrzeugen hängen von der Belastung des Fahrwerkes des Kraftfahrzeuges ab. Bei der Einstellung der Sollwerte für Spur- und Sturzwinkel im Endbereich einer Kraftfahrzeugproduktion, die in der Regel auf einem Fahrwerkstand erfolgt, kann dieser Tatsache auf zwei Weisen Rechnung getragen werden. Entweder wird durch eine Niederzugeinrichtung, die im Fahrwerkstand integriert ist, das Fahrwerk des Kraftfahrzeuges definiert belastet oder aber es wird die tatsächliche Belastung des Fahrwerkes gemessen.

Die Belastung eines Kraftfahrzeuges führt zu einer bestimmten Einfederungstiefe des Kraftfahrzeuges und kann über den Höhenstand ermittelt werden. Der Höhenstand H kann als vertikaler Abstand zwischen dem Radmittelpunkt und einem definierten Punkt der Karosserie, z.B. einer Kotflügelunterkante, definiert werden.

Aus der DE 44 30 813 A1 ist eine Vorrichtung und ein Verfahren zum Bestimmen des vertikalen Abstandes zwischen einem Punkt an einem Fahrzeug und einer Bezugslinie bekannt, wobei eine lineare Meßvorrichtung, eine Befestigung zur Unterstützung des Aufnehmens von linearen Messungen des Punktes enlang zweier schiefer Winkel und ein Computer zum Berechnen des vertikalen Abstandes aus diesen zwei Messungen vorgesehen sind.

Die EP 0 280 941 A1 beschreibt eine Vorrichtung zur berührungsfreien Spurmessung an Kraftfahrzeugen, wobei berührungsfreie Sensoren licht auf den Reifen projizieren, um mindestens zwei Konturlinien an der Reifenoberfläche zu beleuchten. Die Konturlinien werden mit Hilfe von Videokameras aufgenommen und die räumliche Position der Konturlinien bestimmt.

Aus der US 4,598,481 A sind eine Vorrichtung und ein Verfahren bekannt, um die genaue Position von verzogenen Teilen eines Fahrzeuges zu bestimmen., wobei ein x, y, z-Koordinatensystem verwendet wird. Hierbei werden mittels Lasern Ebenen von sichtbarem Licht projiziert, die den x, y, z-Koordinaten entsprechen.

Eine Vorrichtung zum präzisen berührungslosen Bestimmen des Höhenstandes integriert in eine Meßeinheit zur berührungslosen Messung von Spur-, Sturzwinkel und den Koordinaten x, y, z des Radmittelpunktes ist bisher nicht bekannt.

Aufgabe der Erfindung ist es somit, eine Vorrichtung zu schaffen, mit der sich der Höhenstand eines Kraftfahrzeuges berührungslos präzise und automatisch bestimmen läßt.

Diese Aufgabe wird erfindungsgemäß durch eine Vorrichtung zum berührungslosen Bestimmen des Höhenstandes an einem Kraftfahrzeug gelöst, wobei
- erste Mittel zum Bestimmen der Position eines definierten Punktes der Karosserie in z-Richtung, Richtung der Fahrzeughöhe,
- zweite Mittel zum Bestimmen der Position des Radmittelpunktes in z-Richtung, sowie
- eine Auswerteeinheit zum Berechnen des Höhenstandes des Kraftfahrzeuges aus den mit den ersten und zweiten Mitteln bestimmten Positionen, die mit den ersten und den zweiten Mitteln verbunden ist,
vorgesehen sind.

Über das erste und das zweite Mittel wird die Position eines definierten Punktes der Karosserie und eines Radmittelpunktes jeweils in z-Richtung, der Fahrzeughöhe, bestimmt, in der Auswerteeinheit wird aus diesen beiden Positionen der Höhenstand des Kraftfahrzeuges berechnet.

Eine Ausbildung der Erfindung besteht darin, daß die ersten Mittel als eine Kotflügelunterkante des Kraftfahrzeuges erfassender erster Sensor, welcher in x-Richtung definiert verfahrbar ist, ausgebildet ist.

Weiterhin ist es sinnvoll, daß der erste Sensor Teil einer berührungslosen Sensoreneinheit zum Messen von Spur- und Sturzwinkel und den x, y, z-Koordinaten des Radmittelpunktes ist.

Somit kann bei einem bereits mit einer derartigen berührungslosen Sensoreneinheit ausgerüsteten Fahrwerksstand neben Spur und Sturz ohne bedeutende Modifizierungen auch der Höhenstand des Kraftfahrzeugs gemessen werden. Es kann für eine derartige Mehrfachverwendung des Sensors erforderlich sein, daß dieser vertikal kippbar ist.

Erfindungsgemäß ist auch, daß die zweiten Mittel als berührungslose Meßeinheit mit weiteren Sensoren zum Messen von Spur-, Sturzwinkel und den x, y, z-Koordinaten des Radmittelpunktes ausgebildet sind.

Bei Fahrwerkständen, bei denen eine zum berührungslosen Bestimmen der Position des Radmittelpunktes geeignete Sensoreneinheit, z.B. drei im Radbereich angeordnete Sensoren, bereits vorhanden ist, kann der Radmittelpunkt ohne zusätzliche Einrichtungen bestimmt werden.

Es ist vorteilhaft, daß der erste Sensor und die weiteren Sensoren Lasersensoren auf der Basis des Lichtschnittverfahrens sind, die eine hochpräzise berührungsfreie Messung ermöglichen.

Es liegt im Rahmen der Erfindung, daß die Vorrichtung an einem Fahrwerkstand angeordnet ist.

Es kann zweckmäßig sein, daß der erste Sensor auch in Richtung der z-Achse definiert verfahrbar angeordnet ist.

Vorteilhaft ist es, daß mit dem ersten Sensor eine Dreipunktmessung ausführbar ist.

Aus den Ergebnissen der jeweiligen Dreipunktmessungen kann die exakte Position des höchsten Punktes der Kotflügelunterkante ermittelt werden und zusammen mit der Bestimmung der Position des Radmittelpunktes läßt sich der Höhenstand bestimmen.

Somit kann die Vorrichtung für die Höhenstandsmessung an verschiedensten Fahrzeugtypen verwendet werden.

Im folgenden wird eine beispielhafte Ausführung der Erfindung anhand von Zeichnungen beschrieben. Es zeigen
- Fig. 1: eine geschnittene Darstellung eines Rades eines Kraftfahrzeuges mit einer erfindungsgemäßen Vorrichtung,
- Fig. 2: eine Draufsicht auf ein Rad eines Kraftfahrzeuges zur Erläuterung des Meßverfahrens.

Für die folgenden Betrachtungen soll das Koordinatensystem so gelegt sein, daß die x-Achse in Fahrtrichtung und die z-Achse in Richtung der Höhe des Kraftfahrzeuges weist. Die y-Achse verläuft durch die Achse des Rades 6.

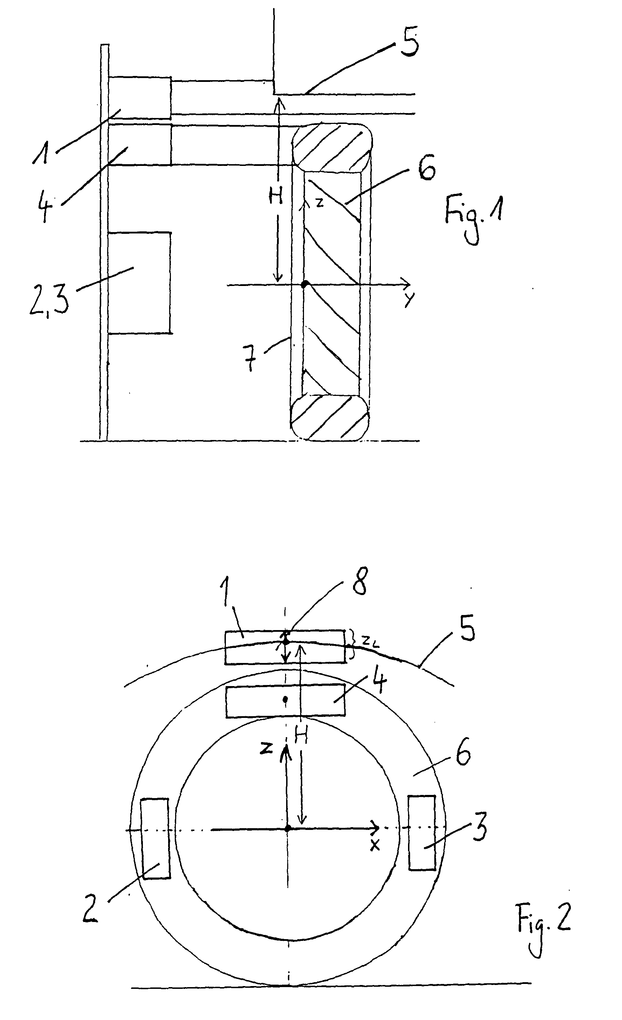

Wie in Fig. 1 dargestellt, weist die erfindungsgemäße Vorrichtung einen ersten Sensor 1 auf, der im Bereich der Kotflügelunterkante 5 eines Kraftfahrzeuges ist. Das Meßfenster des ersten Sensors 1 ist auf die Kotflügelunterkante 5 ausgerichtet und dieser erste Sensor 1 dient zum Ermitteln des höchsten Punkts der Kotflügelunterkante 5.

Die Vorrichtung weist weitere Sensoren 2, 3, 4 auf, die im Bereich des Reifenwulstes 7 des Rades 6 angeordnet sind. Mit den weiteren Sensoren 2, 3, 4 werden neben dem Spur- und Sturzwinkel die Koordinaten x, y, z des Radmittelpunktes bestimmt.

Die Sensoren 1, 2, 3, 4 sind vorzugsweise als Lasersensoren ausgebildet, mit denen eine präzise berührungsfreie Messung möglich ist. Vorteilhaft ist, daß mit den Sensoren 1, 2, 3, 4 nach dem Lichtschnittverfahren gemessen wird und daß mit dem ersten Sensor 1 eine Dreipunktmessung vorgenommen wird.

Die Kontur der Kotflügelunterkante 5 ist durch die Punkte P_{K}= (x, y_{K}(x), z_{K}(x)) als Funktion von x darstellbar. Durch Bestimmung mindestens dreier Punkte mit dem ersten Sensor 1, der vorzugsweise ein Meßfenster 8 von mindestens 50 mm Höhe aufweisen sollte und der bei der Messung in x-Richtung verfahren werden kann, ist eine Ermittlung der Kontur der Kotflügelunterkante 5 und somit auch der z-Koordinate des höchsten Punktes der Kotflügelunterkante 5 mit einer Auswerteeinheit (nicht dargestellt) durchführbar.

Mit der z-Koordinate der Kotflügelunterkante 5 z_{K} und der z-Koordinate des Radmittelpunktes z_{M} kann nun mit der Auswerteeinheit der Höhenstand H des Kraftfahrzeuges durch H = Max (z_{K}(x) - z_{M}) präzise berührungslos ermittelt werden. Aus dem Höhenstand H kann dann die Belastung des Fahrzeuges ermittelt und dieser Wert der Spur- und Sturzwinkelbestimmung zugrundegelegt werden.

Selbstverständlich kann jeweils auch die Position eines anderen definierten Punkts der Karosserie als der Kotflügelunterkante 5 für die Bestimmung des Höhenstandes ermittelt werden.

Die erfindungsgemäße Vorrichtung kann selbstverständlich in einen Fahrwerkstand integriert werden und auch nachträglich in einen bereits bestehenden Fahrzeugstand eingebaut werden.

Um den Höhenstand möglichst vieler verschiedener Fahrzeugtypen mit der erfindungsgemäßen Vorrichtung bestimmen zu können, ist es zweckmäßig, daß der erste Sensor 1 in vertikaler Richtung verschiebbar sind.

## Patentansprüche

1. Vorrichtung zum berührungslosen Bestimmen des Höhenstandes an einem Kraftfahrzeug, enthaltend
• erste Mittel (1) zum Bestimmen der Position eines definierten Punktes (5) der Karosserie des Kraftfahrzeuges in z-Richtung, Richtung der Fahrzeughöhe, **dadurch gekennzeichnet, daß**
• zweite Mittel (2, 3, 4) zum Bestimmen der Position des Radmittelpunktes in z-Richtung, sowie
• eine Auswerteeinheit zum Berechnen des Höhenstandes des Kraftfahrzeuges aus den mit den ersten und zweiten Mitteln bestimmten Positionen, welche mit den ersten und den zweiten Mitteln verbunden ist,
vorgesehen sind.

2. Vorrichtung gemäß Anspruch 1, **dadurch gekennzeichnet, daß** die ersten Mittel (1) als eine Kotflügelunterkante (5) des Kraftfahrzeuges erfassender erster Sensor (1), welcher in x-Richtung definiert verfahrbar ist, ausgebildet ist.

3. Vorrichtung gemäß Anspruch 2, **dadurch gekennzeichnet, daß** der erste Sensor (1) Teil einer berührungslosen Sensoreneinheit zum Messen von Spur- und Sturzwinkel und den x,y,z-Koordinaten des Radmittelpunktes ist.

4. Vorrichtung gemäß Anspruch 1, **dadurch gekennzeichnet, daß** die zweiten Mittel (2, 3, 4) als berührungslose Meßeinheit mit weiteren Sensoren (2, 3, 4) zum Messen von Spur- und Sturzwinkel und den x, y, z-Koordinaten des Radmittelpunktes ausgebildet sind.

5. Vorrichtung gemäß Anspruch 4, **dadurch gekennzeichnet, daß** der erste Sensor (1) und die weiteren Sensoren (2, 3, 4) Lasersensoren auf der Basis des Lichtschnittverfahrens sind.

6. Vorrichtung gemäß Anspruch 1 bis 5, **dadurch gekennzeichnet, daß** die Vorrichtung an einem Fahrwerkstand angeordnet ist.

7. Vorrichtung gemäß Anspruch 2, **dadurch gekennzeichnet, daß** der erste Sensor (1) auch in Richtung der z-Achse definiert verfahrbar angeordnet ist.

8. Vorrichtung gemäß Anspruch 7, **dadurch gekennzeichnet, daß** mit dem ersten Sensor (1) eine Dreipunktmessung ausführbar ist.

## Claims

1. A device for non-contact determination of a motor vehicle's ride height, containing
• a first means (1) for determining the position of a defined point (5) of the body of the motor vehicle in the z direction, direction of the vehicle height,
**characterized in that**
• a second means (2,3,4) for determining the position of the wheel center in the z direction and
• an evaluator for calculating the vehicle's ride height from the positions determined with the first and second means, the evaluator being connected with said first and second means, are provided.

2. The device of claim 1, **characterized in that** the first means (1) is designed as a first sensor (1) which senses and records the lower edge (5) of a fender of the vehicle and can be moved by a defined amount in the x direction.

3. The device of claim 2, **characterized in that** the first sensor (1) is part of a non-contact sensor unit for measuring toe and camber and the x, y and z coordinates of the wheel center.

4. The device of claim I, **characterized in that** the second means (2,3,4) is designed as a non-contact measuring unit having additional sensors (2,3,4) for measuring toe and camber and the x, y and z coordinates of the wheel center.

5. The device of claim 4, **characterized in that** the first sensor (1) and the additional sensors (2,3,4) are laser sensors based on the split-beam method.

6. The device of claims 1 to 5, **characterized in that** the device is installed on a chassis rig.

7. The device of claim 2, **characterized in that** the first sensor (1) can also be moved by a defined amount in the direction of the z axis.

8. The device of claim 7, **characterized in that** a three-point measurement can be carried out with the first sensor (1).

## Revendications

1. Dispositif pour la détermination sans contact de la position en hauteur sur un véhicule automobile, comprenant
- des premiers moyens (1) pour déterminer la position d'un point défini (5) de la carrosserie du véhicule automobile dans la direction z,
**caractérisé en ce qu**'il est prévu
- des deuxièmes moyens (2, 3, 4) pour déterminer la position du centre de la roue dans la direction z ainsi qu'
- une unité d'exploitation pour calculer la hauteur du véhicule automobile à partir des positions déterminées avec les premiers et les seconds moyens, l'unité d'exploitation étant reliée aux premiers et aux deuxièmes moyens.

2. Dispositif selon la revendication 1, **caractérisé en ce que** les premiers moyens (1) sont formés par un premier détecteur (1) déterminant le bord inférieur d'une aile (5) du véhicule automobile, ledit premier détecteur (1) étant mobile de façon définie dans la direction de l'axe x.

3. Dispositif selon la revendication 2, **caractérisé en ce que** le premier détecteur (1) fait partie d'une unité de détection sans contact pour mesurer les angles d'écartement et de parallélisme et les coordonnées x, y, z du centre de la roue.

4. Dispositif selon la revendication 1, **caractérisé en ce que** les deuxièmes moyens (2, 3, 4) ont la forme d'une unité de mesure sans contact avec d'autres détecteurs (2, 3, 4) pour mesurer les angles d'écartement et de parallélisme et les coordonnées x, y, z du centre de roue.

5. Dispositif selon la revendication 4, **caractérisé en ce que** le premier détecteur (1) et les détecteurs supplémentaires (2, 3, 4) sont des détecteurs laser sur la base du procédé à coupe lumineuse.

6. Dispositif selon l'une des revendications 1 à 5, **caractérisé en ce que** le dispositif est placé sur un banc d'essai pour châssis.

7. Dispositif selon la revendication 2, **caractérisé en ce que** le premier détecteur (1) est également mobile de façon définie dans la direction de l'axe z.

8. Dispositif selon la revendication 7, **caractérisé en ce qu'**il est possible de réaliser une mesure à trois points avec le premier détecteur (1).
